# FASCICULE DE BREVET EUROPEEN

(11) **EP 2 349 748 B1**
(45) Date de publication et mention de la délivrance du brevet: **25.06.2014**
(21) Numéro de dépôt: 09736958.1
(22) Date de dépôt: 19.10.2009
(51) Int. Cl.: B60C 23/04

(54) **ORGANE POUR PNEUMATIQUE ET PNEUMATIQUE INSTRUMENTÉ**
VORRICHTUNG FÜR EINEN REIFEN UND REIFEN MIT DIESER SELBEN VORRICHTUNG
POWER COMPONENT AND INSTRUMENTED TYRE

(30) Priorité: 20.10.2008 FR 0857116
(43) Date de publication de la demande: 03.08.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BOROT, Martine, F-63118 Cebazat (FR); CHAMPREDONDE, Jonathan, 63040 Clermont-Ferrand Cedex 9 (FR)
(74) Mandataire: Dequire, Philippe Jean-Marie Denis
(86) Numéro de dépôt international: PCT/EP2009/063668
(87) Numéro de publication internationale: WO 2010/046341

(56) Documents cités:
- EP-A- 0 639 472
- EP-A- 0 689 950
- WO-A-2005/002887

## Description

### DOMAINE DE L'INTENTION

La présente invention est relative à la fixation d'objets fonctionnels dans les pneumatiques pour roues de véhicules. Ces objets peuvent être des capteurs, des circuits d'identification, et/ou des organes propres à communiquer avec l'environnement du pneumatique, à suivre son fonctionnement et l'évolution de ses caractéristiques physiques ou à fournir des alarmes, toutes fonctions plus ou moins élaborées destinées à offrir au marché des pneumatiques dits instrumentés ou parfois intelligents.

### ÉTAT DE LA TECHNIQUE

On sait que l'installation dans le pneumatique d'objets qui représentent une source d'hétérogénéité et doivent rester en ordre de marche pendant de longues périodes représente un problème difficile. En effet, l'objet est censé rester fonctionnel pendant toute la durée de vie du pneumatique, et cela dans des conditions qui préservent l'intégrité physique et fonctionnelle du pneumatique, d'une part, et de l'objet lui même, d'autre part, dans un environnement particulièrement sévère. Tel est le cas notamment des agressions physiques, chocs, vibrations ou encore contraintes de flexion, tension et compression, auxquels peut être exposé l'objet pendant les phases de manipulation, de stockage et montage sur jante des enveloppes pneumatiques et pendant les périodes de roulage. A cela s'ajoutent les phénomènes de vieillissement des matériaux ainsi que l'impact des changements de température qui peuvent se produire pendant les temps de non utilisation du véhicule ou du pneumatique ainsi équipé.

De nombreuses propositions ont été déjà faites pour tenter de résoudre ces problèmes. Ainsi la demande de brevet européen publiée EP 0 639 472 décrit l'intégration à l'intérieur de la paroi d'une enveloppe pneumatique d'un transpondeur dans un récipient de verre revêtu d'une résine synthétique possédant des propriétés de résistance aux chocs. Le transpondeur est noyé dans une excroissance de la gomme constitutive du pneumatique dans une position propice à la communication avec un appareillage extérieur au pneumatique.

La demande de brevet européen EP 0 689 950 décrit quant à elle l'incorporation dans un pneumatique d'un circuit électronique actif auto alimenté. Le circuit est encapsulé dans un matériau rigide ou semi rigide qui empêche sa déformation. Le circuit encapsulé peut être enfermé dans un boîtier flexible tel qu'une poche ou un capot. Les matériaux préconisés pour ce boîtier peuvent comprendre des gommes naturelles ou synthétiques, flexibles et élastiques, possédant une dureté Shore A entre 50 et 95 et de préférence 55 et 75. L'ensemble est fixé à la paroi du pneumatique par exemple dans une cavité formée à la cuisson et ou par un capot en un matériau collé par un adhésif approprié à la paroi interne du pneumatique.

Le document WO 2005/002887 divulgue quant à lui un capteur de pression faisant intervenir l'usage d'un gel, en accord avec les préambules respectifs des revendications 1 et 14.

Si les mesures préconisées dans ces quelques exemples permettent de pallier certaines des difficultés signalées ou d'en minimiser les effets, force est de constater, cependant, que le champ reste encore largement ouvert pour améliorer les modes de fixation d'objets fonctionnels dans les pneumatiques, par exemple lorsqu'on cherche à éviter pour des raisons économiques le recours systématique à des modules électroniques mécaniquement renforcés pour leur incorporation dans le pneumatique, tout en conservant ou améliorant la fiabilité des leurs applications.

### EXPOSE DE L'INVENTION

C'est dans ce contexte que l'invention vise un mode de fixation amélioré d'un objet fonctionnel dans un pneumatique qui procure notamment une excellente protection de l'électronique face aux nombreuses sollicitations notamment mécaniques qui affectent l'objet fonctionnel tout au long de sa vie dans le pneumatique.

Conformément à l'invention, un organe pour pneumatique est caractérisé en ce qu'il comporte un objet fonctionnel en suspension dans une substance molle de très haute déformabilité.

Par déformabilité d'un matériau on entend ici la capacité du matériau à se déformer sous une sollicitation donnée. La déformabilité d'un matériau est d'autant plus élevée que son module de rigidité ou que sa dureté sont faibles.

Lorsque un objet fonctionnel est enrobé d'une telle substance molle et est placé dans ou sur la paroi d'un pneumatique, pratiquement l'ensemble des sollicitations que subit la paroi du pneumatique est amorti par cette substance molle et n'est pas transmis à l'objet fonctionnel.

De préférence, une substance molle de très haute déformabilité présente une dureté shore A inférieure à 5.

En considérant un module de rigidité comme un module d'extension sécant à une déformation de 10 % et à température ambiante, le module d'une substance molle est de préférence inférieur à 0,3 MPa.

En considérant comme module de rigidité un module dynamique en cisaillement ou compression, le module dynamique en cisaillement d'une substance molle est de préférence inférieur à 50 000 Pa, mesuré avec une sollicitation de cisaillement alterné à température ambiante.

De préférence, la substance molle présente un module dynamique en cisaillement inférieur à 50 000 Pa dans une gamme de température comprise entre - 40°C et +100°C.

Cela permet d'obtenir un excellent amortissement des sollicitations dans toute la gamme des températures d'utilisation d'un pneumatique.

Le matériau constituant la substance molle est de préférence incompressible.

La substance molle peut être constituée d'un matériau choisi dans le groupe des gels élastomères thermoplastiques, des gels élastomères thermodurcissables, des solutions colloïdales polymériques.

Les gels élastomères sont des matériaux dont le comportement mécanique est celui d'un élastomère et qui présentent une très grande déformabilité ou souplesse. Ces matériaux connaissent actuellement un très fort développement et sont notamment utilisés pour des prothèses mammaires ou des selles de cheval ou de cycles.

Ces gels élastomères ont une nature chimique très diverse. On peut citer des gels thermoplastiques à base de copolymères blocs à base de styrène comme les SBS, SIS, SIBS, SEBS, SEPS très fortement étendus par des huiles ou autres agents d'extension pour obtenir les propriétés de souplesse recherchées. On peut aussi citer des gels thermodurcissables à base de polyuréthanne (Vorastar de Dow Chemicals) ou de silicone (Momentive Performance Chemicals Inc.).

Des suspensions colloïdales polymériques peuvent aussi présenter des propriétés proches de celles des gels élastomères précédents.

Selon un mode de réalisation préférentiel, l'organe comporte en plus une enveloppe extérieure de protection en un matériau caoutchouteux compatible avec les matériaux d'un pneumatique.

Cette enveloppe extérieure peut être agencée pour être fixée sur une face interne ou externe de la paroi d'un pneumatique.

Elle peut aussi être agencée pour que l'organe puisse être disposé dans une poche ménagée dans une paroi d'un pneumatique. Cette poche peut être débouchant extérieurement ou non.

Ceci peut être réalisé au moment de la fabrication de l'ébauche du pneumatique à cru.

Alternativement, la substance molle entourant l'objet fonctionnel peut être disposée dans une telle poche après la cuisson du pneumatique lorsque l'on a ménagé préalablement une ouverture d'accès à partir d'une des faces de la paroi du pneumatique.

La substance molle peut aussi être un fluide visqueux.

Lorsque la substance molle est un fluide visqueux, il peut être avantageux de relier mécaniquement l'objet fonctionnel à la paroi de la poche ou de la pochette pour limiter la liberté de déplacement de l'objet lors du roulage du pneumatique.

L'objet fonctionnel de l'organe est avantageusement un transpondeur à identification par radiofréquence passif muni de deux antennes formant dipôle. Un tel transpondeur est usuellement appelé RFID.

L'invention a aussi pour objet un pneumatique instrumenté pour roue de véhicule comportant une paroi à laquelle ou dans laquelle est fixé un objet fonctionnel en un emplacement donné. Ce pneumatique est caractérisé en ce que l'objet fonctionnel est maintenu en suspension dans une substance molle attachée à la paroi et en ce que la substance molle possède une déformabilité sous sollicitation très supérieure à la déformabilité sous sollicitation du ou des matériaux constitutifs de la paroi à l'emplacement où est fixé l'objet.

Avantageusement, le module de rigidité du ou des matériaux constitutifs de la paroi du pneumatique à l'emplacement où est fixé l'objet fonctionnel est au moins dix fois plus élevé que celui de la substance molle.

Par pneumatique, on entend une « enveloppe pneumatique » c'est-à-dire un objet gonflable servant d'interface entre une jante de roue et le sol ainsi qu'un « bandage non pneumatique » c'est-à-dire un objet remplissant la même fonction mais non gonflable. Dans les deux cas, il peut être utile d'incorporer un objet fonctionnel et les modes de fixation décrits vont améliorer de façon très substantielle leur endurance en service.

La qualité de protection conférée par l'invention par rapport aux sollicitations du milieu environnant l'objet est telle qu'un renforcement mécanique poussé de l'objet n'est pas forcément nécessaire. Ceci a évidemment des conséquences pour réaliser des économies sur le prix de revient de l'objet. Dans certains cas il peut même devenir possible de supprimer toute encapsulation des circuits électroniques avant de les enrober de la substance molle nécessaire à leur montage en « suspension » dans la paroi du pneumatique conformément à l'invention.

### BRÈVE DESCRIPTION DES FIGURES

D'autres caractéristiques et avantages de l'invention ressortent de la description faite ci-après en référence aux dessins annexés qui montrent, à titre d'exemples non limitatifs, des formes de réalisation de l'objet de l'invention :
- la figure 1 représente une vue en coupe d'un organe constitué d'un objet fonctionnel en suspension dans une substance molle ;
- la figure 2 représente une vue en coupe d'un second organe fixé à la surface d'une couche de gomme intérieure (GI) d'un pneumatique instrumenté ;
- la figure 3 est une vue similaire à la figure 2 d'un troisième organe de réalisation simplifiée ;
- la figure 4 est une vue similaire à la figure 2 dans laquelle la substance molle est un fluide visqueux ; et
- la figure 5 montre l'implantation d'organes dans la paroi d'une enveloppe de pneumatique dans trois emplacements différents ainsi qu'un emplacement sur cette paroi.

### DESCRIPTION D'UN OU PLUSIEURS EXEMPLES DE RÉALISA TION

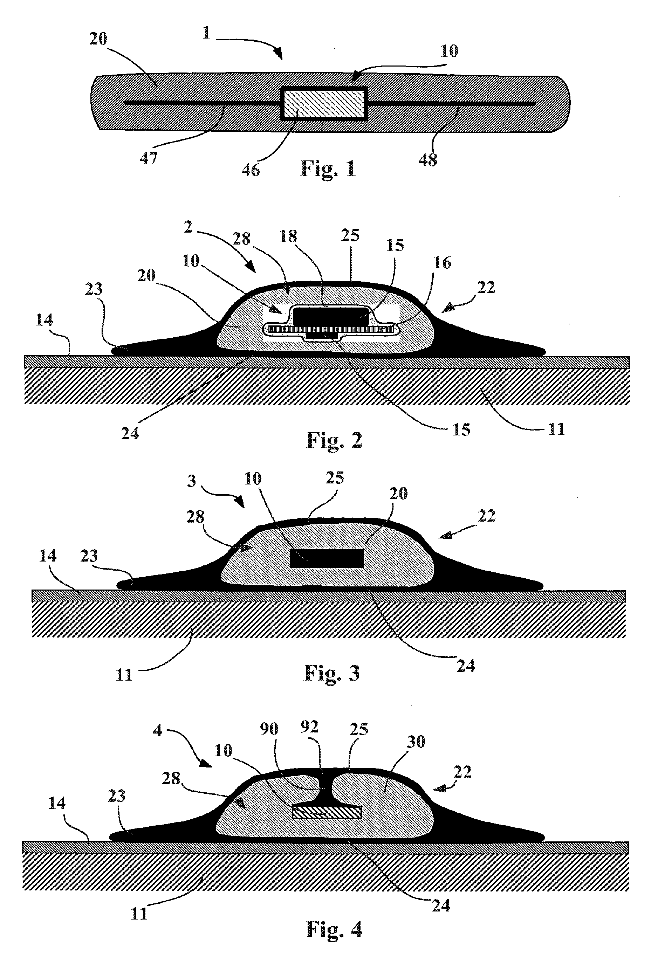

La figure 1 présente en coupe un organe 1 sous sa forme la plus simple. Cet organe 1 comprend un objet fonctionnel 10 entouré d'une substance molle, ici un gel élastomère.

L'objet fonctionnel peut être un circuit électronique 10 permettant d'identifier une enveloppe pneumatique à partir d'une interrogation par voie hertzienne (RFID), ou un capteur pour le contrôle de l'environnement ou du fonctionnement de cette enveloppe.

A la figure 1 est représenté en coupe un transpondeur RFID avec un corps 46 parallélépipédique formé par l'assemblage des composants électroniques prolongé de part et d'autre du corps 46 par deux conducteurs rectilignes 47 et 48, droits ou torsadés formant une antenne dipolaire. Ce circuit électronique 10 est enrobé dans une substance molle, ici un gel élastomère 20. L'ensemble forme un organe 1 de forme générale tubulaire affinée aux deux extrémités avec une section droite sensiblement ellipsoïdale.

Un mode de réalisation simple d'un tel organe est décrit dans le cas d'un gel élastomère thermodurcissable, le gel TSE 3062 de Momentive Performance Materials Inc. On commence par mélanger les deux constituants liquides du gel de silicone ; puis on verse le liquide obtenu dans un moule de géométrie adaptée à la forme de l'organe, jusqu'à mi-hauteur ; on réalise une première réticulation du gel de silicone à une température et pendant un temps adapté pour obtenir une gélification du liquide ; on met alors en place le transpondeur RFID et ses deux antennes dipolaires ; on complète la cavité du moule avec le liquide constitué des deux composants du gel et on effectue un cycle complet de réticulation du gel de silicone.

On obtient ainsi l'organe 1. On constate notamment que cet organe présente une excellente adhésion entre les antennes métalliques du transpondeur et le gel.

Il est alors possible d'intégrer l'organe 1 dans un pneumatique pendant la confection à cru de son ébauche. On sait que les composants de l'ébauche d'un pneumatique sont empilés successivement les uns sur les autres. Au cours de cette opération, l'organe 1 est positionné à l'emplacement prévu sur l'une des couches de gomme crue. Après avoir achevé de constituer à cru l'ébauche, celle-ci est placée dans un moule pour réaliser la vulcanisation des composants du pneumatique et donner un pneumatique prêt à l'usage. L'organe 1 est ainsi placé dans une poche fermée du pneumatique. Le gel élastomère 20 est un matériau au comportement élastique incompressible. Cela lui permet de supporter les efforts liés à la confection et à la vulcanisation de l'ébauche du pneumatique.

L'organe peut comporter une enveloppe de protection autour de la substance molle. La figure 2 représente un tel organe 2 fixé, à la face libre d'une couche de gomme intérieure (GI) 14 de la paroi 11 d'un pneumatique. Le circuit 10 est composé de façon classique d'un ou plusieurs composants électroniques intégrés 15 montés sur une plaquette de circuit imprimé 16 (souple ou rigide). L'ensemble ainsi constitué est encapsulé dans une résine 18. L'ensemble est enrobé par, ou noyée dans une masse de substance molle ici constituée d'un gel élastomère 20 dans lequel est suspendu le circuit 10. Le gel élastomère 20 remplit tout l'espace intérieur d'une enveloppe de protection 22 en matériau élastomère. Cette enveloppe constitue ainsi un « patch » ou emplâtre 22.

Le patch 22 est typiquement constitué par deux pièces minces d'une gomme caoutchouc, par exemple analogue à la gomme intérieure 14 du pneumatique auquel il est destiné. L'une de ces pièces 24 est fixée à la face libre de la gomme intérieure 14. L'autre pièce 25 définit avec la couche inférieure 24 une poche 28 remplie par le gel élastomère 20. Les bords 23 des deux couches 24 et 25 sont soudés l'un à l'autre tout autour de la poche 28 par vulcanisation. La résine d'encapsulation 18 facilite les manipulations du circuit 10 et favorise une excellente adhésion entre le gel 20 et l'objet fonctionnel 10. La résine 18 peut être d'une nature chimique similaire à celle du gel élastomère 20 mais de rigidité très notablement supérieure.

L'assemblage de la couche de gomme inférieure 24 du patch 22 avec la paroi de la gomme intérieure du pneumatique peut être réalisé de plusieurs manières, y compris par collage direct de cette couche de gomme inférieure 24 sur la gomme intérieure 14 avec ou sans interposition d'une couche de gomme de liaison.

L'organe 3 de la figure 3 comporte un circuit électronique ou objet fonctionnel 10 qui est placé directement dans le gel élastomère 20 sans encapsulation. Cela est possible et avantageux lorsque l'adhésion entre la surface du circuit et le gel élastomère est bonne et qu'il n'y a pas de risque de migrations de produits entre le gel et le circuit.

Dans les trois exemples décrits, le gel 20 est un gel élastomère, c'est-à-dire qu'il a un comportement mécanique d'un élastomère avec une très grande déformabilité ou souplesse. Lorsque des sollicitations sont subies par la paroi 11 du pneumatique, celles-ci sont transmises directement au gel 20 ou à la paroi 24 du patch 22. Mais, en raison de la très grande déformabilité du gel élastomère 20, ces sollicitations sont absorbées par le gel sans que des efforts notables soient transmis au circuit électronique rigide 10. Lorsque les sollicitations s'arrêtent, le gel reprend sa forme initiale. Il est préférable qu'il y ait une bonne adhésion entre le gel élastomère et les parois 24 et 25 du patch 22 ou les parois adjacentes du pneumatique, mais cela n'est pas nécessaire. Lorsqu'il n'y a pas d'adhésion entre les parois et le gel, un très faible coefficient de frottement entre le gel élastomère et les parois est souhaitable pour qu'il n'y ait pas d'échauffement dû aux déplacements relatifs entre le gel et ces parois. Un exemple de gel élastomère correspondant à ces spécifications est le gel de silicone réticulé TSE 3062 de la société Momentive Performance Materials Inc.

Des mesures de module d'extension ont été effectuées sur des échantillons du gel élastomère ci-dessus à dix (10) pourcent d'allongement qui ont fourni des valeurs du module sécant de 0,05 MPa (mégapascals). La dureté de ce gel est trop faible pour être mesuré avec un duromètre shore A.

Ces mesures sont réalisées à température ambiante (23°C) et en première élongation. Le module à une déformation donnée correspond au rapport entre la force d'extension mesurée à l'allongement correspondant à la déformation donnée divisée par la section initiale de l'éprouvette et la valeur de la déformation à l'allongement donné.

Il est à noter que le module sécant à 10% d'une gomme intérieure est typiquement de l'ordre de 2,7 MPa, soit plus de cinquante fois le module du gel élastomère testé.

La figure 4 présente un organe 4 avec un autre mode de réalisation dans lequel la substance molle est un fluide visqueux. Dans ce cas, le fluide permet par ses déplacements dans la poche 28 un excellent amortissement de toutes les sollicitations transmises par la paroi 11 du pneumatique. D'autre part, pour éviter que le circuit électronique ne se déplace trop à l'intérieur de la poche, on peut ajuster la viscosité du fluide. On peut aussi relier mécaniquement le circuit à l'une des parois 25 de la poche 28, de préférence la paroi extérieure. C'est ce qui est illustré à la figure 4. Une liaison mécanique 90 est agencée entre le circuit 10 et la paroi 25. Cette liaison est ici une languette, tige ou plot 90 possédant une extrémité 92 fixée vers le centre de la paroi 25 du côté libre de la pochette 22 et l'autre extrémité directement attachée à la paroi de l'objet suspendu 10. Les mouvements de l'objet à l'intérieur de la poche 28, sous l'action des sollicitations dynamiques dont il peut être l'objet en roulage, sont amorties par la viscosité du fluide visqueux 30 qui tend à fluer autour de l'objet. Cependant la languette ou plot joue un rôle de ressort de rappel de l'objet vers sa position d'équilibre dans la pochette. Ce ressort 90 peut être constitué du même matériau que la pochette flexible elle-même, ou d'un autre matériau élastique, ou même d'un matériau rigide, (mais qui peut s'incliner par déformation de la pochette à laquelle il est attaché).

L'organe peut aussi être inséré après cuisson dans un pneumatique dans une poche préalablement aménagée dans la paroi d'un pneumatique et qui débouche par une ouverture en forme de fente à la surface de la gomme intérieure, en réalisant ainsi une sorte de boutonnière non représentée.

Le montage décrit permet de protéger de façon efficace le circuit électronique 10 dans l'environnement particulièrement sévère d'un pneumatique face à diverses formes d'agression non seulement mécanique, mais aussi physique et chimique en cours d'utilisation.

On sait en effet qu'un pneumatique en roulage subit des vibrations, des chocs et des contraintes en compression, en tension, en flexion et en cisaillement, qui toutes constituent autant de causes de fatigue. Ainsi par exemple, lors des déformations cycliques de l'enveloppe à chaque tour de roue au passage du sommet dans l'aire de contact, la paroi de l'enveloppe subit des efforts importants de flexion en aller et retour entre l'entrée et la sortie dans cette zone. Les zones de flancs correspondant à l'aire de contact sont également déformées cycliquement en flexion et en compression, tandis que les autres portions de la zone de flancs subissent tour à tour des contraintes de tension et de compression, tous efforts qui sont susceptibles d'affecter à la longue l'intégrité d'un objet fonctionnel et de sa fixation à la paroi pneumatique et d'en dégrader le fonctionnement.

Pour toutes ces raisons les circuits électroniques utilisés de plus en plus fréquemment dans les pneumatiques sont très généralement des objets mécaniquement renforcés. Les circuits intégrés utilisés et leur assemblage avec d'autres composants sont renforcés. Ils sont en outre encapsulés par des résines hautement résistantes pour former des ensembles compacts (packaging). Il en résulte un renchérissement des fonctions recherchées et alourdissement de la structure d'ensemble dont la miniaturisation est alors problématique.

L'amortissement de sollicitations susceptibles d'affecter un objet fonctionnel grâce à sa suspension dans une substance molle, telle que le gel 20, constitue une amélioration intéressante à cet égard.

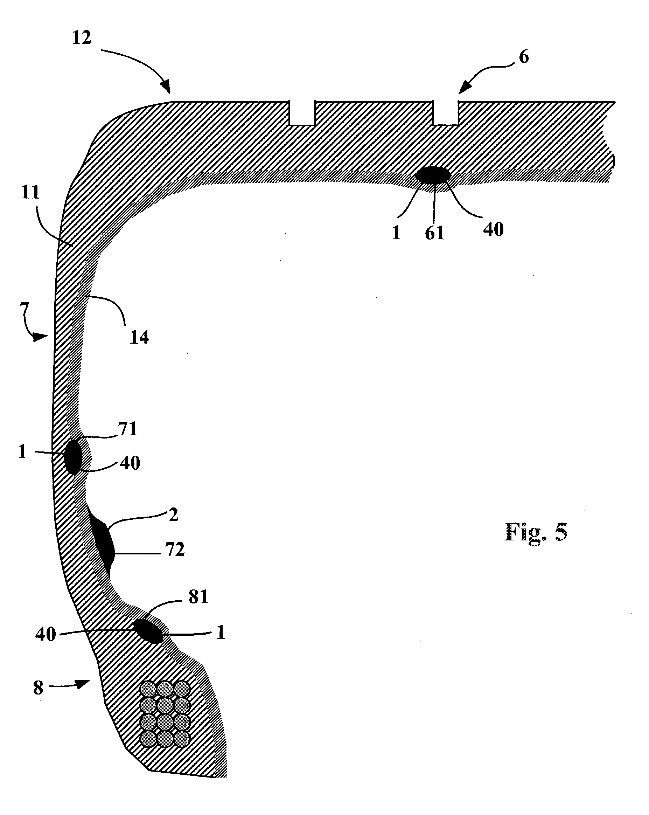

Comme le montre la figure 5, plusieurs emplacements sont envisageables pour fixer des organes 1, 2, 3 dans une enveloppe de pneumatique 12. L'enveloppe de pneumatique comprend un sommet 6, un flanc 7 et un bourrelet 8. Une première implantation est représentée dans une zone 81 dans le bourrelet 8. Une chambre 40 est comblée par un organe 1. Les parois de la chambre 40 sont d'une part la gomme intérieure 14 et d'autre part une gomme de renfort de la nappe carcasse (non représentée). La gomme intérieure à un module élastique à 10 % de l'ordre de 2,7 MPa, c'est-à-dire bien plus élevé que celui du gel 20. Une deuxième implantation d'un organe 1 représentée est dans le flanc 7 de l'enveloppe 12 du côté intérieur en un emplacement 71. Une seconde chambre 40 est comblée par un organe 1. Les parois de cette seconde poche peuvent être constituée soit par la gomme intérieure soit par la gomme de flanc elle-même, soit par les calandrages de nappe carcasse ou la gomme de renfort précédemment citée. Dans tous les cas, la déformabilité du gel est très très supérieure à celle des gommes ou matériaux adjacents du pneumatique. On peut aussi disposer un organe 1 dans le sommet 6 dans la zone 61.

A la figure 5, on voit aussi une implantation possible d'un organe du type des figures 2, 3 ou 4 collé à la surface intérieure du flanc 7 en une zone 72. Bien entendu, la localisation de la pochette n'est pas strictement limitée aux emplacements illustrés. En outre les organes peuvent être orientés dans une direction sensiblement parallèle à l'axe de rotation du pneumatique ou au contraire perpendiculairement à celui-ci.

Ainsi, les demandeurs ont constaté, de façon non évidente, qu'il était possible d'obtenir d'excellents résultats en utilisant une telle solution pour maintenir en suspension un élément à protéger vis-à-vis des perturbations affectant non pas un support relativement rigide, mais un milieu lui-même très déformable, tel que la paroi d'une enveloppe pneumatique destinée à évoluer dans des conditions d'utilisation sévères à de multiples égards. On a pu notamment constater que l'objet « suspendu » dans le milieu réticulé par la vulcanisation du gel pouvait se maintenir à l'écart des parois de la chambre 40 même quand celles-ci font l'objet de déformations importantes de la part de l'enveloppe pneumatique à laquelle cette poche est associée.

On a évoqué l'utilisation de la solution de montage selon l'invention pour des transpondeurs passifs. Il faut préciser qu'elle s'applique aussi de façon générale à des circuits de capteurs de grandeurs physiques comme la pression et la température, environnantes sans que la présence de la substance molle entre la partie sensible du capteur et l'intérieur du pneumatique ne constitue un obstacle. En effet cette substance ne s'oppose pas, notamment, à la transmission de la pression qui règne dans l'enveloppe du pneumatique et qui agit sur la pochette qui la contient, pas plus que de la température du milieu environnant, par exemple des gommes du pneumatique à l'emplacement du capteur. Ces paramètres physiques peuvent être donc mesurés au travers de l'encapsulation constituée par la pochette et son gel, aussi bien à l'arrêt qu'en roulage. On notera que dans certaines configurations de montage (notamment sous le sommet du pneumatique) la pression apparente sur le capteur peut s'élever au dessus de la pression réelle en raison des efforts centrifuges relativement importants qui affectent la masse de substance molle. Cependant ce phénomène n'est pas rédhibitoire. En effet il crée simplement une dérive dans la mesure de la pression réelle dont il est assez facile de se débarrasser dès lors que la vitesse du véhicule est connue.

Sur le plan économique, des gains de coût sont réalisables grâce à la technique d'amortissement prévue par l'invention. On a vu que cette dernière permet en effet de faire appel à des circuits électroniques moins renforcés que jusqu'à présent vis-à-vis des agressions mécaniques et physiques externes, voire même à des circuits non renforcés qui peuvent être simplement sélectionnés parmi des éléments fabriqués en très grande série et disponibles « sur étagère », ce qui permet d'en diminuer considérablement le coût.

On note enfin que l'objet fonctionnel est convenablement protégé non seulement pendant la vie fonctionnelle de l'enveloppe pneumatique à laquelle il est fixé mais aussi pendant la fabrication de celle-ci dans le cas où il y est lui-même incorporé avant la cuisson de vulcanisation.

L'invention n'est pas limitée aux exemples décrits et représentés et diverses modifications peuvent y être apportées sans sortir de son cadre défini par les revendications annexées.

## Revendications

1. Organe (1, 2, 3, 4) propre à communiquer avec l'environnement d'un pneumatique (12) **caractérisé en ce qu'**il comporte un objet fonctionnel (10) en suspension dans une substance molle (20) de très haute déformabilité.

2. Organe (1,2, 3) selon la revendication 1, dans lequel la substance molle (20) présente un module sécant d'élasticité en extension à 10 % de déformation et à température ambiante inférieur à 0,3 MPa.

3. Organe (1, 2, 3) selon l'une des revendications 1 et 2, dans lequel la substance molle 20) présente un module dynamique en cisaillement et à température ambiante inférieur à 50 000 Pa.

4. Organe (1, 2, 3) selon la revendication 3, dans lequel la substance molle (20) présente un module dynamique en cisaillement inférieur à 50 000 Pa dans une gamme de température comprise entre -40°C et 100°C.

5. Organe (1, 2, 3) selon l'une des revendications 1 à 4, dans lequel la substance molle (20) présente une dureté shore A inférieure à 5.

6. Organe (1, 2, 3) selon l'une quelconque des revendications précédentes, dans lequel la substance molle (20) est un matériau choisi dans le groupe des gels élastomères thermoplastiques, des gels élastomères thermodurcissables, des solutions colloïdales polymériques.

7. Organe (1, 2, 3) selon la revendication 6, dans lequel la substance molle (20) est un gel élastomère thermodurcissable à base de silicone.

8. Organe (2, 3, 4) selon l'une quelconque des revendications 1 à 7, comportant en plus une enveloppe extérieure de protection (22) en un matériau caoutchouteux compatible avec les matériaux d'un pneumatique.

9. Organe (2, 3, 4) selon la revendication 8, dans lequel l'enveloppe extérieure (22) est agencée pour être'fixée sur une face interne ou externe de la paroi d'un pneumatique (12).

10. Organe (2, 3, 4) selon la revendication 8, dans lequel l'enveloppe extérieure (22) est agencée pour que l'organe puisse être disposée dans une poche (28) aménagée dans une paroi d'un pneumatique.

11. Organe selon l'une des revendications 8 à 10, prise en combinaison avec la revendication 1, dans lequel la substance molle est un fluide visqueux (30).

12. Organe (4) selon la revendication 11, dans lequel l'objet fonctionnel (10) est mécaniquement lié à l'enveloppe de protection 28.

13. Organe (1, 2, 3, 4) selon l'une quelconque des revendications précédentes, dans lequel l'objet fonctionnel (10) est un transpondeur à identification par radiofréquence passif muni de deux antennes formant dipôle.

14. Pneumatique instrumenté pour communiquer à l'environnement de celui-ci, (12) pour roue de véhicule comportant une paroi à laquelle ou dans laquelle est fixé un objet fonctionnel (10) en un emplacement donné, **caractérisé en ce que** ledit objet fonctionnel est maintenu en suspension dans une substance molle (20) attachée à ladite paroi et **en ce que** ladite substance molle (20) possède une déformabilité sous sollicitation très supérieure à la déformabilité sous sollicitation du ou des matériaux constitutifs de la paroi à l'emplacement où est fixé l'objet.

15. Pneumatique instrumenté (12) selon la revendication 14, tel que le module de rigidité du ou des matériaux constitutifs de la paroi à l'emplacement où est fixé l'objet est au moins dix fois plus élevé que celui de la matière molle.

## Patentansprüche

1. Element (1, 2, 3, 4), das dazu geeignet ist, mit der Umgebung eines Reifens (12) zu kommunizieren, **dadurch gekennzeichnet, dass** es einen schwebenden Funktionsgegenstand (10) in einer weichen Substanz (20) mit sehr hoher Verformbarkeit umfasst.

2. Element (1, 2, 3) nach Anspruch 1, wobei die weiche Substanz (20) einen Sekantenelastizitätsmodul bei Dehnung von weniger als 0,3 MPa bei 10 % Verformung und bei Umgebungstemperatur aufweist.

3. Element (1, 2, 3) nach einem der Ansprüche 1 und 2, wobei die weiche Substanz (20) einen dynamischen Schubmodul von weniger als 50.000 Pa bei Umgebungstemperatur aufweist.

4. Element (1, 2, 3) nach Anspruch 3, wobei die weiche Substanz (20) einen dynamischen Schubmodul von weniger als 50.000 Pa in einem Temperaturbereich zwischen -40 °C und 100 °C aufweist.

5. Element (1, 2, 3) nach einem der Ansprüche 1 bis 4, wobei die weiche Substanz (20) eine Shore-A-Härte von weniger als 5 aufweist.

6. Element (1, 2, 3) nach einem der vorhergehenden Ansprüche, wobei die weiche Substanz (20) ein Material ist, das aus der Gruppe von thermoplastischen elastomeren Gelen, duroplastischen elastomeren Gelen und polymeren kolloidalen Lösungen ausgewählt ist.

7. Element (1, 2, 3) nach Anspruch 6, wobei die weiche Substanz (20) ein duroplastisches elastomeres Gel auf Silikonbasis ist.

8. Element (2, 3, 4) nach einem der Ansprüche 1 bis 7, das außerdem einen äußeren Schutzmantel (22) aus einem kautschukartigen Material, das mit den Materialien eines Reifens vereinbar ist, umfasst.

9. Element (2, 3, 4) nach Anspruch 8, wobei der äußere Mantel (22) dazu eingerichtet ist, auf einer Innen- oder Außenfläche der Wand eines Reifens (12) fixiert zu werden.

10. Element (2, 3, 4) nach Anspruch 8, wobei der äußere Mantel (22) derart eingerichtet ist, dass das Element in einer Tasche (28) angeordnet werden kann, die in eine Wand eines Reifens eingebunden ist.

11. Element (4) nach einem der Ansprüche 8 bis 10 in Kombination mit Anspruch 1, wobei die weiche Substanz eine viskose Flüssigkeit (30) ist.

12. Element (4) nach Anspruch 11, wobei der Funktionsgegenstand (10) mit dem Schutzmantel (28) mechanisch verbunden ist.

13. Element (1, 2, 3, 4) nach einem der vorhergehenden Ansprüche, wobei der Funktionsgegenstand (10) ein passiver Transponder mit Radiofrequenzidentifikation ist, der mit zwei Antennen ausgestattet ist, die einen Dipol bilden.

14. Reifen (12), der mit Instrumenten zum Kommunizieren mit der Umgebung dieses Reifens ausgestattet ist, für ein Fahrzeugrad, der eine Wand umfasst, an oder in der ein Funktionsgegenstand (10) an einer gegebenen Stelle fixiert ist, **dadurch gekennzeichnet, dass** der Funktionsgegenstand schwebend in einer weichen Substanz (20) an der Wand angebracht gehalten wird und dass die weiche Substanz (20) über eine Verformbarkeit unter Belastung verfügt, die viel höher ist als die Verformbarkeit unter Belastung des oder der Materialien der Wand an der Stelle, an der der Gegenstand fixiert ist.

15. Mit Instrumenten ausgestatteter Reifen (12) nach Anspruch 14, wobei der Torsionsmodul des oder der Materialien, die die Wand bilden, an der Stelle, an der der Gegenstand fixiert ist, mindestens zehn Mal höher als der Torsionsmodul der weichen Substanz ist.

## Claims

1. Member (1, 2, 3, 4) suitable for communicating with the environment of a tyre (12), **characterized in that** it comprises a functional object (10) in suspension in a soft substance (20) of very high deformability.

2. Member (1, 2, 3) according to Claim 1, in which the soft substance (20) has a secant modulus of elasticity in extension at 10% deformation and at ambient temperature of less than 0.3 MPa.

3. Member (1, 2, 3) according to one of Claims 1 and 2, in which the soft substance (20) has a dynamic shear modulus at ambient temperature of less than 50 000 Pa.

4. Member (1, 2, 3) according to Claim 3, in which the soft substance (20) has a dynamic shear modulus of less than 50 000 Pa in a temperature range of between -40°C and 100°C.

5. Member (1, 2, 3) according to one of Claims 1 to 4, in which the soft substance (20) has a Shore A hardness of less than 5.

6. Member (1, 2, 3) according to any one of the preceding claims, in which the soft substance (20) is a material chosen from the group of thermoplastic elastomer gels, thermosetting elastomer gels, polymeric colloidal solutions.

7. Member (1, 2, 3) according to Claim 6, in which the soft substance (20) is a silicone-based thermosetting elastomer gel.

8. Member (2, 3, 4) according to any one of Claims 1 to 7, also comprising an outer protective casing (22) made of a rubbery material compatible with the materials of a tyre.

9. Member (2, 3, 4) according to Claim 8, in which the outer casing (22) is arranged to be attached to an inner or outer face of the wall of a tyre (12).

10. Member (2, 3, 4) according to Claim 8, in which the outer casing (22) is arranged so that the member can be placed in a pocket (28) fitted in a wall of a tyre.

11. Member (4) according to one of Claims 8 to 10, taken in combination with Claim 1, in which the soft substance is a viscous fluid (30).

12. Member (4) according to Claim 11, in which the functional object (10) is mechanically bound to the protective casing (28).

13. Member (1, 2, 3, 4) according to any one of the preceding claims, in which the functional object (10) is a passive radiofrequency identification transponder furnished with two antennas forming a dipole.

14. Instrumented tyre (12) suitable for communicating with the environment of said tyre for a vehicle wheel comprising a wall to which or in which a functional object (10) is attached in a given location, **characterized in that** the said functional object is held in suspension in a soft substance (20) attached to the said wall and **in that** the said soft substance (20) has a deformability under stress that is much greater than the deformability under stress of the material or materials forming the wall at the location in which the object is attached.

15. Instrumented tyre (12) according to Claim 14, such that the modulus of rigidity of the material or materials forming the wall in the location in which the object is attached is at least ten times higher than that of the soft material.
